# EUROPÄISCHE PATENTANMELDUNG

(11) **EP 3 379 692 A1**
(43) Veröffentlichungstag der Anmeldung: **26.09.2018**
(21) Anmeldenummer: 17162168.3
(22) Anmeldetag: 21.03.2017
(51) Int. Cl.: H02J 9/06

(54) **VERFAHREN ZUM BETRIEB EINER ELEKTRISCHEN ANLAGE MIT EINER MEHRZAHL AN ELEKTRISCHEN VERBRAUCHERN, STROMVERSORGUNGSEINHEIT UND ELEKTRISCH BETRIEBENE ANLAGE**

(71) Anmelder: Siemens Aktiengesellschaft, 80333 München (DE)
(72) Erfinder: Allahut, Gerd, 91171 Greding (DE)

(57) **Zusammenfassung**

Die Erfindung betrifft ein Verfahren zum Betrieb einer elektrischen Anlage mit einer Mehrzahl an elektrischen Verbrauchern, welche an mindestens eine Stromversorgungseinheit angeschlossen sind und von dieser mit einer Spannung versorgt werden. Des Weiteren betrifft die Erfindung eine Stromversorgungseinheit, die ausgelegt ist, das Betriebsverfahren durchzuführen und eine elektrisch betriebene Anlage. Die Stromversorgungseinheit ist derart ausgestaltet, dass entweder eine Grundversorgungsspannung durchgeschaltet oder im Falle eines Ausfalls der Grundversorgungsspannung eine Pufferspannung durchgeschaltet wird, welche von einer Energiespeichereinheit bereitgestellt wird. Erfindungsgemäß wird vorgeschlagen, dass zur Durchführung eines geregelten Einschaltvorgangs der elektrischen Verbraucher eine Einschaltverzögerungszeit vorgegeben wird, nach deren Ablauf am Ausgang der Stromversorgungseinheit entweder die Grundversorgungsspannung oder die Pufferspannung durchgeschaltet wird. Erfindungsgemäß wird ferner vorgeschlagen, dass zur Durchführung eines geregelten Einschaltvorgangs der elektrischen Verbraucher am Ausgang der Stromversorgungseinheit erst dann eine Spannung ausgegeben wird, wenn ein Ladeniveau der Energiespeichereinheit gleich oder größer als ein Schwellwert des Energiespeicherladeniveaus ist. Auf diese Weise wird ein Einschaltmanagement für Stromversorgungen erreicht, welches ein absolut sicheres unterbrechungs- und damit störungsfreies Hochfahren einer Mehrzahl an elektrischen Verbrauchern gewährleistet.

## Beschreibung

Die Erfindung betrifft ein Verfahren zum Betrieb einer elektrischen Anlage mit einer Mehrzahl an elektrischen Verbrauchern, welche an mindestens eine Stromversorgungseinheit angeschlossen sind und von dieser mit einer Spannung versorgt werden, wobei die Stromversorgungseinheit entweder eine Grundversorgungsspannung durchschaltet oder im Falle eines Ausfalls der Grundversorgungsspannung eine Pufferspannung durchschaltet, welche von einer Energiespeichereinheit bereitgestellt wird.

Des Weiteren betrifft die Erfindung eine Stromversorgungseinheit, die ausgelegt ist, das Verfahren durchzuführen, und eine elektrisch betriebene Anlage zur Durchführung des Verfahrens und ein Computerprogramm.

In vielen technischen Bereichen wie zum Beispiel in der Automatisierungstechnik oder der Gebäudetechnik ist eine absolut zuverlässige Stromversorgung eine notwendige Voraussetzung für den reibungslosen Betrieb der technischen Anlage. Für den Fall, dass die reguläre Versorgungsspannung aufgrund von Störungen im Stromnetz beispielsweise in einer technischen Anlage einbricht, existieren Geräte für eine zuverlässige Stromversorgung, die geregelte Ausgangsspannungen sowohl für Gleichspannungen als auch für Wechselspannungen liefern.

Unterbrechungsfreie Stromversorgungen können bei Netzausfall einen Verbraucher durch zuverlässige Pufferung durch einen angeschlossenen Energiespeicher eine bestimmte Zeit lang mit Energie versorgen (=Pufferbetrieb). Die unterbrechungsfreien Stromversorgungen ergänzen demnach vorhandene Netzgeräte für unterbrechungsfreie Nennströme aus Batteriemodulen oder sonstigen Energiespeichern.

Bei Maschinen oder Anlagenkomponenten, die eine gewisse Zeitspanne zum Hoch- und Runterfahren ihrer Betriebstüchtigkeit benötigen, und welche während dieser Zeitspanne nicht ausgeschaltet werden dürfen, weil es sonst zu Beschädigungen, Einschränkungen der Betriebstauglichkeit, Datenverlust oder einer erschwerten Wiederinbetriebnahme kommen kann, sollte neben einem zuverlässigen Betrieb auch ein unterbrechungsfreies Hochfahren gewährleistet sein. Beispiele für solche Maschinen oder Anlagenkomponenten sind Personal Computer (PCs), insbesondere Industrie-PCs, die technische Anlagen steuern und/oder überwachen, aber auch Maschinen mit drehenden Teilen, bei denen erst eine gewisse Drehgeschwindigkeit erreicht werden muss, bevor sie voll betriebstauglich sind oder auch thermodynamische Maschinen, welche erst vorgeheizt oder abgekühlt werden müssen, bevor sie einsatzfähig sind.

Selbst eine unterbrechungsfreie Stromversorgung, die über einen Pufferbetrieb aufgrund eines angeschlossenen Energiespeichers verfügt, kann bei kurz hintereinander erfolgenden Einbrüchen der Versorgungsspannung den reibungslosen Betrieb nicht gewährleisten, wenn zwischenzeitlich der Energiespeicher erschöpft ist. Es kann zu Inkonsistenzen und Datenverlusten kommen. Bislang wurde die Unterbrechungsfestigkeit einer unterbrechungsfreien Stromversorgung beim Neustart eines PCs/einer Maschine nachdem der PC/die Maschine wegen eines vorherigen Einbruchs der regulären Versorgungsspannung bereits gepuffert werden musste und das Energiespeicherladeniveau dadurch gesunken ist, noch nicht betrachtet. Wenn zum Zeitpunkt des Neustarts keine ausreichende Unterbrechungsfestigkeit vorliegt, würde dies beim erneuten Einbruch der regulären Versorgungsspannung den Absturz/Crash des PCs bzw. den plötzlichen Stillstand der Maschine beim Hochfahren bedeuten. Eine maximale Ausfallzeit aufgrund einer erschwerten Wiederinbetriebnahme, Datenverlust und Beschädigungen an Maschinen und Werkstücken sind die Folge.

Auch bei Standard-Stromversorgungen ohne angeschlossenem Energiespeicher, welche daher nicht im Pufferbetrieb arbeiten können, wäre eine Unterbrechungsfestigkeit oder Unterbrechungsfreiheit wünschenswert.

Der Erfindung liegt daher die Aufgabe zugrunde, ein verbessertes Verfahren zum sicheren Betrieb einer technischen/elektrischen Anlage, welche mit einer Stromversorgungseinheit verbunden ist, bereitzustellen, sodass insbesondere ein unterbrechungsfreies Hochfahren der Komponenten der technischen Anlage gewährleistet ist. Es ist ferner die Aufgabe der Erfindung eine entsprechende Stromversorgungseinheit und eine elektrisch betriebene Anlage mit Stromversorgungen dieser Art anzugeben.

Die Aufgabe hinsichtlich des Verfahrens wird erfindungsgemäß durch die Merkmale der unabhängigen Ansprüche 1 und 9 gelöst. Hinsichtlich der Vorrichtung wird die Aufgabe durch die Merkmale der unabhängigen Ansprüche 16 und 22 gelöst.

Das erfindungsgemäße Verfahren zum Betrieb einer elektrischen Anlage mit einer Mehrzahl an elektrischen Verbrauchern, welche an mindestens eine Stromversorgungseinheit angeschlossen sind und von dieser mit einer Spannung versorgt werden, ist derart ausgestaltet, dass die Stromversorgungseinheit entweder eine Grundversorgungsspannung durchschaltet oder im Falle eines Ausfalls der Grundversorgungsspannung eine Pufferspannung durchschaltet, welche von einer Energiespeichereinheit bereitgestellt wird. Erfindungsgemäß wird vorgeschlagen, dass zur Durchführung eines geregelten Einschaltvorgangs der elektrischen Verbraucher eine Einschaltverzögerungszeit vorgegeben wird, nach deren Ablauf am Ausgang der Stromversorgungseinheit entweder die Grundversorgungsspannung oder die Pufferspannung durchgeschaltet wird. Erfindungsgemäß wird ferner vorgeschlagen, dass zur Durchführung eines geregelten Einschaltvorgangs der elektrischen Verbraucher am Ausgang der Stromversorgungseinheit erst dann eine Spannung ausgegeben wird, wenn ein Ladeniveau der Energiespeichereinheit gleich oder größer als ein Schwellwert des Energiespeicherladeniveaus ist. Auf diese Weise wird ein Einschaltmanagement für Stromversorgungen erreicht, welches entweder eine vom Anwender gewählte Einschaltverzögerungszeit berücksichtigt oder welches in Abhängigkeit eines Energiespeicherladeniveaus das Einschalten des Leistungsausgangs einer Stromversorgungseinheit steuert oder welches eine Kombination aus Einschaltverzögerungszeit und Energiespeicherladeniveau darstellt, sodass ein absolut sicheres unterbrechungs- und damit störungsfreies Hochfahren bzw. störungsfreies Hochfahren einer Mehrzahl an elektrischen Verbrauchern gewährleistet ist.

Die mit der Erfindung erzielten Vorteile bestehen insbesondere darin, dass gegenüber einer herkömmlichen unterbrechungsfreien Stromversorgungseinheit eine deutlich verbesserte Daten- und Anlagensicherheit sowie ein reibungsloser Neustart eines elektrischen Verbrauchers wie eines PCs/Maschine gewährleistet wird, auch wenn die reguläre Versorgungsspannung wiederholt hintereinander in kurzen Zeitabständen ausfällt. Auf diese Weise liegt zum Zeitpunkt des Neustarts eines PCs/einer Maschine nun dem Anwender eine Gewissheit vor, dass wirklich immer erst nach Erreichen der vom Anwender selbst vorgegebenen Bedingungen der Leistungsausgang der Stromversorgung eingeschaltet und in der Folge der PC/die Maschine wieder in Betrieb genommen wird. Potenziell zum Scheitern verurteilte Neustarts von PCs/Maschinen sind damit ausgeschlossen.

Vorteilhafte Ausgestaltungen der Erfindung sind Gegenstand der Unteransprüche.

Im Folgenden wird die Erfindung sowie deren Ausgestaltungen und weitere Vorteile anhand der Figuren, in denen Ausführungsbeispiele der Erfindung dargestellt sind, näher beschrieben und erläutert.

Es zeigen:
Fig. 1 eine schematische Darstellung einer elektrischen Anlage mit elektrischen Verbrauchern und einer unterbrechungsfreien Stromversorgungseinheit, welche mit Energiespeichereinheiten verbunden sind
Fig. 2a bis Fig. 2d verschiedene Ausführungsvarianten des Einschaltmanagements

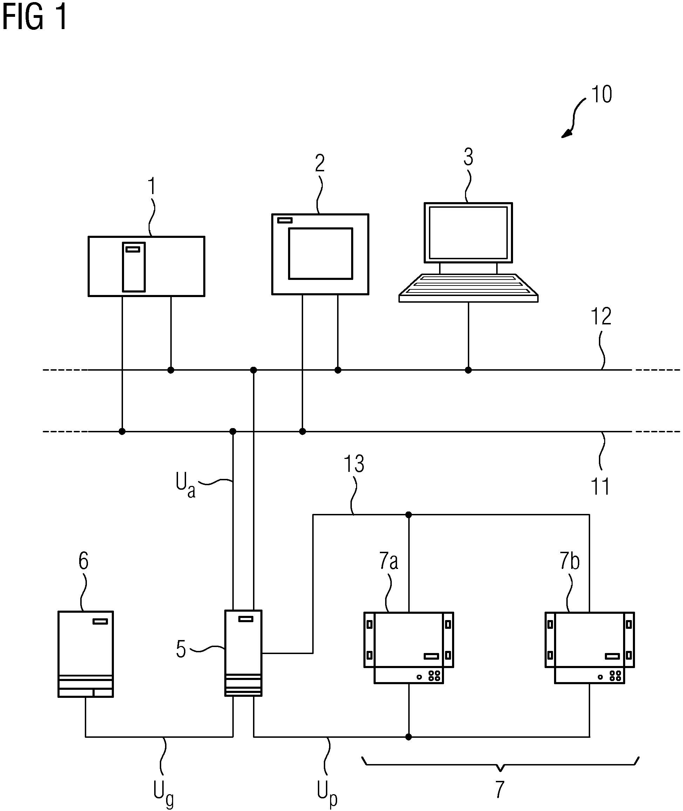

Eine Ausführungsvariante einer elektrisch betriebenen Anlage 10 mit mindestens einer Stromversorgungseinheit und mit einer Mehrzahl an elektrischen Verbrauchern 1, 2 oder 3 ist in Fig. 1 dargestellt. Die Anlage 10 kann Teil einer Automatisierungsanlage sein oder als Stromversorgung für Produktionsmaschinen und sonstige Aggregate, Maschinen und Anlagen dienen, bei denen eine kontrollierte, ggfs. unterbrechungsfreie Stromversorgung zum zuverlässigen Betrieb notwendig ist. Als Verbraucher seien hier beispielhaft Industrie-PCs 1 und 2 und ein herkömmlicher PC 3 gezeigt, welche üblicherweise zum Steuern, Bedienen und Beobachten, zum Konfigurieren oder Überwachen einer technischen Anlage eingesetzt werden.

Um Industrie-PCs oder Steuerungen betreiben zu können, benötigt man üblicherweise 24 V Gleichstrom. Um 24 V Gleichstrom zu erhalten, wird der vom Netz gelieferte Wechselstrom (in Europa 230 V) mit einem Wechselstrom/Gleichstrom-Wandler umgewandelt. Dieser AC/DC-Wandler ist üblicherweise in einer Standardstromversorgung 6 untergebracht, welche eine Grundversorgungsspannung Ug (hier in Form von 24 V Gleichstrom) liefert. Eine solche Standardstromversorgung kann Unterbrechungen der Grundversorgungsspannung allerdings nicht überbrücken. Die Standardstromversorgung 6 zur Lieferung einer Grundversorgungsspannung Ug ist üblicherweise als einzelne Baugruppe ausgestaltet.

Um die Anlage ausfallsicher zu machen, wird eine unterbrechungsfreie Stromversorgung verwendet. Eine solche unterbrechungsfreie Stromversorgungseinheit 5 ist in Fig. 1 dargestellt. Die unterbrechungsfreie Stromversorgung 5 nimmt dabei den Gleichstrom von der Standardstromversorgung 6 auf und schaltet ihn an die angeschlossenen Verbraucher 1, 2, 3 durch. Die Stromversorgungseinheit 5 hat in diesem Fall einen Gleichstrom-Gleichstrom-Wandler (DC/DC-Wandler) integriert. Die Unterbrechungsfreiheit erreicht die Stromversorgungseinheit 5 durch die angeschlossene Energiespeichereinheit 7 zur Lieferung einer Pufferspannung Up. Die Stromversorgungseinheit 5 verfügt über eine Elektronik, die dafür sorgt, dass unterbrechungsfrei zwischen Grundversorgungsspannung Ug und Pufferspannung Up umgeschaltet werden kann. Die Stromversorgungseinheit 5 kann dabei nicht nur den Verbraucher (z.B. einen PC oder eine Maschine) eine bestimmte Zeit lang mit Energie versorgen (= Pufferbetrieb) sondern auch den Pufferbetrieb an den PC oder die Maschinensteuerung melden, was dem PC (z. B. über den Aufruf einer Batch - Datei) oder der Maschine (über das Steuerungsprogramm) das vollständige Herunterfahren und Beenden laufender Programme, das Schließen von Datenbanken ohne Datenverlust und das abschließende Herunterfahren des Betriebssystems/der Maschine ermöglicht. Hierdurch wird Daten - und Anlagensicherheit sowie der reibungslose Neustart des PCs/der Maschine gewährleistet, falls die reguläre Versorgungsspannung wieder hergestellt sein sollte.

Die Verbraucher 1, 2 und 3, welche in beliebiger Anzahl vorhanden sein können, sind in dem in Fig. 1 dargestellten Ausführungsbeispiel über ein Versorgungsnetzwerk 11, zur Versorgung mit elektrischer Energie, und optional über ein Kommunikationsnetzwerk 12, wie zum Beispiel einem Industrial Ethernet, mit der unterbrechungsfreien Stromversorgungseinheit 5 verbunden. Ist keine unterbrechungsfreie Stromversorgung in einer Anlage notwendig, werden die Netzwerke 11 und optional 12 direkt mit der Standardstromversorgung 6 zur Lieferung der Grundversorgungsspannung Ug verbunden.

Die Energiespeichereinheit 7 umfasst eine beliebige Anzahl von Batteriemodulen 7a, 7b,.... Die Batteriemodule können beispielsweise auf wartungsfreien Blei-Akkus, temperaturunempfindlichen Reinblei-Akkus, langlebigen Lithium-Akkus oder auf einer Kondensatortechnologie basieren. Bei Vorhandensein einer Energiespeichereinheit 7, kann der Ausfall von einer Grundversorgungsspannung Ug liefernden Quelle 6 für eine Zeitdauer tp durch eine Pufferspannung Up überbrückt werden, welche von der Energiespeichereinheit 7 geliefert wird.

Eine Stromversorgungseinheit 5 oder eine Standardstromversorgung 6 weist zumindest einen Leistungsausgang für die gewünschte Ausgangsspannung Ua oder den gewünschten Strom auf und kann über einen oder auch mehrere Kommunikationsausgänge wie z.B. einen USB-Port oder eine Ethernet/Profinet Schnittstelle verfügen. Je nach Verwendung existieren auch Stromversorgungseinheiten 5 oder 6, die nicht an ein Kommunikationsnetz 12 anschlossen sind bzw. gar nicht über eine Kommunikationsschnittstelle verfügen und die nur über die lokal installierte Firmware gesteuert werden sollen.

Eine unterbrechungsfreie Stromversorgungseinheit 5, wie in dem in Fig. 1 gezeigten Ausführungsbeispiel dargestellt, weist zusätzlich zu den Ausgängen zumindest zwei Spannungseingänge auf, einen ersten Eingang für die Grundversorgungsspannung Ug und einen zweiten Eingang für die Pufferspannung Up. Eine Aussteuerung der Pufferspannung kann optional über die Kommunikationsverbindung 13 erfolgen. Über eine solche Kommunikationsverbindung 13 - wenn vorhanden - kann auch der Zustand der Energiespeichermodule oder deren Ladeniveau an die Stromversorgungseinheit 5 gemeldet werden. So muss beim Betrieb der elektrischen Anlage 10 berücksichtigt werden, dass die Batteriemodule zur Aufladung eine bestimmte Zeitdauer benötigen. Daher kann es in den Fällen, bei denen ein kontrollierter Einschalt- oder Ausschaltvorgang der Verbraucher 1, 2, 3 gewährleistet werden soll, vorteilhaft sein, ein Energiespeicherladeniveau zu ermitteln. Letzteres wird häufig anhand von vom Batteriehersteller gelieferten Kennlinien und in Abhängigkeit vom Alter, von der Temperatur und vom Ladezustand der Batteriemodule bestimmt.

Der PC/die Maschine ist mit dem Leistungsausgang der Stromversorgungseinheit 5 elektrisch verbunden. Der Neustart des PCs/der Maschine erfolgt immer sofort, wenn die reguläre Grundversorgungsspannung Ug am Leistungseingang der Stromversorgungseinheit 5 anliegt und in Folge dessen der Leistungsausgang der Stromversorgungseinheit 5 sofort eingeschaltet wird, der in diesem Fall die Ausgangsspannung Ua = Ug liefert. Im Pufferbetrieb schaltet die Stromversorgungseinheit 5 die von den Batteriemodulen der Energiespeichereinheit gelieferte Pufferspannung Up durch und es liegt die Ausgangsspannung Ua = Up an. Die Stromversorgungseinheit 5 nimmt dabei keine Rücksicht darauf, ob der Energiespeicher ausreichend geladen ist oder nicht. Ein erneuter Einbruch der regulären Grundversorgungsspannung kann ggf. nicht vollständig überbrückt werden. Zu beachten ist, dass immer, wenn die Grundversorgungsspannung Ug anliegt, gleichzeitig auch die Batteriemodule der Energiespeichereinheit aufgeladen werden.

Um nun, unter den oben genannten Bedingungen, einen geregelten Einschaltvorgang der elektrischen Verbraucher 1,2,3,... zu gewährleisten, werden erfindungsgemäß verschiedene Varianten vorgeschlagen: Ein Einschaltmanagement für Stromversorgungen, welches entweder eine vom Anwender gewählte Einschaltverzögerungszeit berücksichtigt (= verzögerungszeitabhängiges Einschaltmanagement) oder welches in Abhängigkeit eines Energiespeicherladeniveaus (= energiespeicherladeniveauabhängiges Einschaltmanagement) das Einschalten des Leistungsausgangs einer Stromversorgungseinheit steuert. Bei Stromversorgungen mit angeschlossenem Energiespeicher, wie in Fig. 1 gezeigt, kommen auch weitere Varianten, welche eine Mischung aus verzögerungszeitabhängigem Einschaltmanagement und energiespeicherladeniveauabhängigem Einschaltmanagement darstellen, zum Einsatz.

Das verzögerungszeitabhängige Einschaltmanagement ist die Variante, bei der der Anwender eine bestimmte Einschaltverzögerungszeit tv vorgibt oder konfiguriert. Nach Ablauf der Einschaltverzögerungszeit liegt am Ausgang der Stromversorgungseinheit 5 des in Fig. 1 gezeigten Ausführungsbeispiels entweder eine Grundversorgungsspannung Ug oder eine Pufferspannung Up an. Das verzögerungszeitabhängige Einschaltmanagement kann auch bei Stromversorgungen ohne Energiespeicher, also bei nicht-unterbrechungsfreien Stromversorgungen, implementiert werden.

Das energiespeicherladeniveauabhängige Einschaltmanagement ist die Variante, bei der der Anwender einen Schwellwert SW für ein Ladeniveau LN der Energiespeichereinheit 7 vorgibt oder konfiguriert. Nach Erreichen dieses Schwellwertes SW, d.h. wenn das Ladeniveau LN der Energiespeichereinheit gleich oder größer als der vorgegebene Schwellwert ist, liegt am Ausgang der Stromversorgungseinheit 5 des in Fig. 1 gezeigten Ausführungsbeispiels entweder eine Grundversorgungsspannung Ug oder eine Pufferspannung Up an. Der Schwellwert wird dabei bevorzugt als Prozentzahl des maximalen Ladezustands der Batteriemodule gewählt. Alternativ kann auch eine Ladezeit tl der Energiespeichereinheit 7 ermittelt werden, während der eine Aufladung der Energiespeichereinheit 7 mit einem Ladestrom bis zu dem gewünschten Schwellwert des Energiespeicherladeniveaus erfolgt. Ein Anwender könnte dann eine gewünschte Ladezeit vorgeben, welche allerdings derart gewählt werden muss, dass eine ausreichende Aufladung der Energiespeichereinheit gewährleistet ist.

Bei der Konfiguration des energiespeicherladeniveauabhängigen Einschaltmanagement, welches für unterbrechungsfreie Stromversorgungen mit angeschlossener Energiespeichereinheit geeignet ist, muss der Anwender deutlich weniger beachten, als bei dem zeitverzögerten Einschaltmanagement, welches allerdings den Vorteil hat, dass es auch für Stromversorgungen ohne Energiespeichereinheit, also für Standardstromversorgungen, geeignet ist. Der Einsatz einer unterbrechungsfreien Stromversorgung, welche sowohl eine Zeitverzögerung bietet, als auch eine Berücksichtigung des Ladeniveaus der Energiespeichereinheit, wird sicherlich die größte Zuverlässigkeit eines Einschaltmanagements gewährleisten.

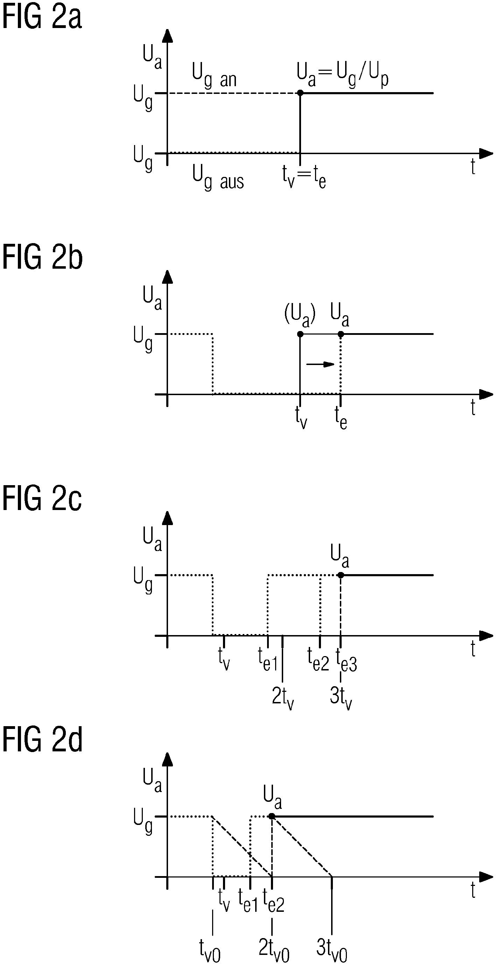

In Fig. 2 sind verschiedene Ausführungsvarianten eines Einschaltmanagements für Stromversorgungen ohne und mit angeschlossener Energiespeichereinheit dargestellt, wobei in vielen Fällen eine Kombination aus zeitverzögertem und energiespeicherladeniveauabhängigem Einschaltmanagement vorliegt. Aufgetragen sind die Funktionen der Ausgangsspannung Ua einer beliebigen Stromversorgungseinheit in Abhängigkeit von der Zeit t.

In Fig. 2a ist der einfachste Fall gezeigt, bei dem nach Ablauf der Zeitspanne tv eine Spannung Ua am Ausgang der Stromversorgungseinheit 5 anliegt. Der Einschaltzeitpunkt te der Verbraucher entspricht hier tv. Dabei ist es unerheblich, wie die Situation vor dem Einschalten aussieht. Ohne Energiespeichereinheit kann schon vor te die Grundversorgungsspannung Ug am Eingang der Stromversorgungseinheit anliegen oder die Grundversorgungsspannung Ug wird erst zum Zeitpunkt te=tv entsprechend einer Sprungfunktion durchgeschaltet. Mit Energiespeichereinheit wird zum Zeitpunkt te die Spannung durchgeschaltet, die gerade am Eingang der Stromversorgungseinheit 5 anliegt; Dabei kann es sich entweder um die Grundversorgungsspannung Ug oder um die Pufferspannung Up handeln. Allerdings ist es bei dieser Variante nachteilig, wenn keine Energiespeichereinheit vorhanden ist und gerade zum Zeitpunkt te=tv keine Grundversorgungsspannung Ug vorhanden ist.

In Fig. 2b ist eine Ausführungsvariante des zeitverzögerten Einschaltmanagements gezeigt, bei dem die zuvor eingestellte Zeitverzögerung tv bis zum Einschaltzeitpunkt te verlängert wird, wenn eine bestimmte Bedingung erfüllt ist. Bei dieser Variante wird die Möglichkeit eines Ausfalls der Grundversorgungsspannung während der vorgegebenen Einschaltverzögerungszeit tv mit berücksichtigt.

Erfindungsgemäß ist in einer Variante eine Verlängerung der Einschaltverzögerungszeit tv bis zu dem Zeitpunkt te vorgesehen, an dem die Grundversorgungsspannung Ug wieder zum Durchschalten bereit steht. Diese Variante ist insbesondere für Stromversorgungseinheiten ohne Energiespeichereinheit sinnvoll. Stromversorgungseinheiten mit angeschlossener Energiespeichereinheit (wie in Fig. 1 gezeigt) wird durch die Verlängerung der Einschaltverzögerungszeit tv bis zum Zeitpunkt te die durch den Ausfall der Grundversorgungsspannung Ug verlorengegangene Ladezeit tl verschafft, die mindestens benötigt wird, um die Energiespeichereinheit ausreichend aufzuladen. Für Stromversorgungseinheiten mit angeschlossener Energiespeichereinheit (wie in Fig. 1 gezeigt) kann auch zusätzlich ein Ladeniveau LN der Energiespeichereinheit überprüft werden und erst in Abhängigkeit des Ladeniveaus LN die Pufferspannung Up durchgeschaltet werden. Alternativ kann eine Ausgangsspannung Ua erst dann zur Verfügung stehen, wenn das Ladeniveau der Energiespeichereinheit einen Schwellwert erreicht hat. In diesem Fall kann zum Einschaltzeitpunkt te sowohl Ug oder Up durchgeschaltet werden. Hierbei wurde berücksichtigt, dass ein Aufladen der Energiespeichereinheit nur möglich ist, wenn die Grundversorgungsspannung Ug vorhanden ist. Diese Variante würde somit den Fall abdecken, bei dem kurz vor Erreichen eines bestimmten Ladeniveaus des Energiespeichers die Grundversorgungsspannung einbricht. Der Einschaltvorgang würde in diesem Fall so lange verzögert, bis ein "sicheres" Ladeniveau erreicht ist, das für eine ausreichend große Zeitspanne eine Pufferspannung Up bereitstellen kann.

In Fig. 2c ist eine Ausführungsvariante des zeitverzögerten Einschaltmanagements gezeigt, bei dem die zuvor eingestellte Zeitverzögerung tv so oft wiederholt wird, bis eine bestimmte Bedingung erfüllt wird. Auch bei dieser Variante wird die Möglichkeit eines Ausfalls der Grundversorgungsspannung während der vorgegebenen Einschaltverzögerungszeit tv mit berücksichtigt.

In einer Variante dieses Ausführungsbeispiels wird bei Ausfall der Grundversorgungsspannung Ug die Einschaltverzögerungszeit tv so oft wiederholt bis die Grundversorgungsspannung Ug wieder bereit steht (te1 in Fig. 2c) oder alternativ die Grundversorgungsspannung Ug mindestens eine vollständige Einschaltverzögerungszeit tv bereit gestanden hat (te3 in Fig. 2c). Am Ausgang der Stromversorgungseinheit kann dann die Ausgangsspannung Ua entweder sofort bei Vorhandensein der Grundversorgungsspannung Ug ausgegeben werden (zum Zeitpunkt te1 oder te2 in Fig. 2c) oder aber erst nach Ablauf eines Vielfachen der Einschaltverzögerungszeit n*tv zum Zeitpunkt te3, wobei n eine beliebige Zahl > 1 ist. Auch diese Variante ist insbesondere für Stromversorgungseinheiten ohne Energiespeichereinheit sinnvoll. Für Stromversorgungseinheiten mit angeschlossener Energiespeichereinheit (wie in Fig. 1 gezeigt) kann zusätzlich ein Ladeniveau LN der Energiespeichereinheit überprüft werden und erst in Abhängigkeit des Ladeniveaus LN die Pufferspannung Up zu den Zeitpunkten te1 (wenn das Ladeniveau ausreichend hoch ist) oder te2 (erst nach Ablauf eines Vielfachen der Einschaltverzögerungszeit n*tv bei ausreichend hohem Ladeniveau durchgeschaltet werden. Dies ist zum Beispiel für Synchronisationszwecke der Verbraucher 1, 2, 3 besonders gut geeignet. Alternativ kann auch bei diesem Ausführungsbeispiel zunächst ein Aufladen der Energiespeichereinheit erfolgen und erst nach Erreichen eines Schwellwertes des Ladeniveaus der Energiespeichereinheit am Ausgang der Stromversorgungseinheit eine Spannung Ua = Ug oder Ua = Up zu den Zeitpunkten te1, te2 oder te3 eingeschaltet werden.

In Fig. 2d ist eine Ausführungsvariante des zeitverzögerten Einschaltmanagements gezeigt, bei dem im Falle eines Ausfalls der Grundversorgungsspannung Ug während der vorgegebenen Einschaltverzögerungszeit tv die Einschaltverzögerungszeit tv ab dem Zeitpunkt des Ausfalls der Grundversorgungsspannung Ug erneut von vorne zu laufen beginnt und so oft wiederholt wird, bis
a) die Grundversorgungsspannung Ug wieder bereit steht, oder
b) nach Überprüfung eines Ladeniveaus LN der Energiespeichereinheit in Abhängigkeit des Ladeniveaus am Ausgang der Stromversorgungseinheit als Ausgangsspannung Ua die Pufferspannung Up ausgegeben wird, oder
c) ein Ladeniveau LN der Energiespeichereinheit einen Schwellwert SW erreicht hat, oder
d) die Grundversorgungsspannung Ug mindestens eine vollständige Einschaltverzögerungszeit tv bereit gestanden hat.

In Fig. 2d ist zu Beginn der Zeitachse die Grundversorgungsspannung Ug eingeschaltet. Zum Zeitpunkt tv0, welcher vor der eingestellten Verzögerungszeit tv liegt, bricht die Grundversorgungsspannung Ug ein. Nun wird die Zeitverzögerungszeit sozusagen auf 0 zurückgesetzt und beginnt von vorne zu laufen (Countdown) und wiederholt sich so oft (2tv0, 3tv0 in Fig. 2d) bis eine der o.g. Bedingungen a) bis d) erfüllt ist. Zur Einschaltzeit te1 oder te2 schaltet die Stromversorgungsspannung entweder die Grundversorgungsspannung Ua=Ug durch oder die Pufferspannung Ua=Up, wenn das Ladeniveau LN der Energiespeichereinheit ausreichend hoch ist oder ein Schwellwert eines Ladeniveaus LN der Energiespeichereinheit überschritten ist. Die Einschaltzeit te1 wird gewählt, sobald eine der Spannungen Ug oder Up (bei ausreichendem Ladeniveau) verfügbar ist. Die Einschaltzeit te2 wird gewählt, wenn eine der Spannungen Ug oder Up erst nach Ablauf eines Vielfachen n (n = natürliche Zahl) der Verzögerungszeit (des Countdowns) am Ausgang der Stromversorgungseinheit anliegen soll (zum Beispiel für Synchronisationszwecke). Denkbar ist auch, dass die Versorger erst zurzeit 3t0 eingeschaltet werden, also wenn die Grundversorgungsspannung Ug mindestens eine vollständige Einschaltverzögerungszeit tv bereit gestanden hat.

Für alle bisher beschriebenen Ausführungsvarianten (beschrieben in den Figuren 2b, 2c und 2d) gilt, dass die Ladeniveaus und Schwellwerte, die nach der Verlängerung, der Wiederholung oder dem Countdown der Verzögerungszeit ein zuverlässiges Einschalten gewährleisten, beispielsweise von einem Anwender vorgegeben werden oder auch von einer Applikation vorgegeben werden, in welcher bereits Erfahrungswerte eingespeichert sind. Selbstverständlich kann eine Applikation die nötige Einschaltverzögerungszeit auch fortlaufend ermitteln. Selbstlernend kann die Applikation die Einschaltverzögerungszeit anpassen, um z.B. durch Verlängern der Verzögerungszeit auf einen alternden Energiespeicher oder auf Veränderungen am PC/an der Maschine zu reagieren oder durch Verkürzen der Verzögerungszeit auf z.B. einen neuen Energiespeicher (wogegen der alte getauscht worden ist) oder auf Veränderungen am PC/an der Maschine zu reagieren. Durch die fortlaufende Ermittlung der Verzögerungszeit, die mit einem Condition Monitoring des Energiespeichers oder sogar des PCs/der Maschine gekoppelt ist, kann der optimale Austauschzeitpunkt des Energiespeichers festgestellt und über ein Meldesystem gemeldet werden, um das sichere Hoch- und Herunterfahren des PCs/der Maschine in einem weiteren Punkt zu gewährleisten. Die Einschaltmanagementvarianten werden bevorzugt als Firmware in der Stromversorgung implementiert oder aber auch als Applikationssoftware, z.B. als Softwarebaustein auf einem Prozessor in oder außerhalb der Stromversorgung. Da - wie in Fig.1 dargestellt - die Stromversorgungseinheit 5 mit einem Kommunikationsnetzwerk 12, wie zum Beispiel einem Industrial Ethernet, verbunden werden kann und dafür in der Regel entsprechende digitale Ein- und Ausgänge, USB- oder Ethernet/Profinet-Schnittstellen aufweisen kann, ergeben sich vielfache Implementierungsmöglichkeiten. So kann die Einschaltmanagement-Applikationssoftware auch auf einem Leitrechner eines Leitsystems einer technischen Anlage implementiert sein, wobei der Leitrechner über das Netzwerk 12 oder sonstige Netzwerke mit der Stromversorgung kommuniziert und Daten austauscht. Durch die Netzanbindung ist auch eine Anbindung ans Internet möglich, wodurch sich weitere Realisierungsvarianten ergeben. Beispielsweise ist dann auch die Nutzung einer IT-Infrastruktur wie dem Cloud-Computing möglich. IT-Leistungen wie beispielsweise Speicherplatz, Rechenleistung oder Anwendungssoftware können dann als Service über das Internet genutzt werden und auf der Stromversorgungseinheit ist nur eine einfache Schaltlogik für das Durch- und Anschalten der entsprechenden Spannungen vorhanden. Durch die Integration oder Kommunikationsanbindung der erfindungsgemäßen Stromversorgungseinheit in oder an PC-basierte Systeme wird eine einfache Konfiguration und Überwachung, umfangreiche Diagnosemöglichkeiten über den Zustand aller Komponenten der elektrischen Anlage und ein Fern-Monitoring via integriertem Web-Server erreicht. Außerdem ist ein Zugriff auf Gerätekonfigurationsdaten und Betriebsdaten wie z.B. die Ströme und Spannungen, den Ladestrom und Batteriestrom möglich (beispielsweise für den Zweck eines Condition Monitorings aller Komponenten der elektrischen Anlage und insbesondere der Stromversorgungseinheit und Energiespeicher).

Das Engineering, also die Konfiguration der Einschaltmanagement-Applikationssoftware kann in einer Ausführung über ein Engineering-Softwaretool erfolgen. Bei Netzausfall ermöglichen die Pufferspannung und die Einbindung der Stromversorgung in ein Netzwerk, dass die Stromversorgungen auch unabhängig voneinander in einen definierten Zustand gebracht werden, z.B. auch zeitversetzt. Hierfür stehen dann beispielsweise Funktionsbausteine z.B. für die SIMATIC der Fa. Siemens bereit. Durch Integration der Einschaltmanagement-Applikationssoftware in ein übergeordnetes Engineering- oder Automatisierungssystem oder auch Leitsystem können beliebige Daten, Zustände, Alarme, Diagnoseinformationen bei Inbetriebnahme einer technischen Anlage die Konfigurierung oder Parametrierung systemimmanent vorgegeben werden und im laufenden Betrieb beobachtet und visualisiert werden. Die entsprechende Gerätekonfiguration (Wahl der Einschaltmanagementvariante und die Eingabe der gewünschten Verzögerungszeit bzw. des Energiespeicherladeniveaus) kann dabei über ein Engineering Tool an die Stromversorgungseinheit übertragen werden oder direkt über einen Webserver der Stromversorgungseinheit vorgenommen werden.

Sowohl das verzögerungszeitabhängige als auch das energieniveauabhängige Einschaltmanagement funktionieren auch dann, wenn es sich um Stromversorgungseinheiten handelt, die nicht an ein Kommunikationsnetz (12, 13) anschlossen sind bzw. gar nicht über eine Kommunikationsschnittstelle verfügen. Insbesondere für Stromversorgungseinheiten ohne Kommunikationsnetz/Kommunikationsschnittstelle ist es besonders vorteilhaft, die gewünschte Variante des verzögerungszeitabhängigen Einschaltmanagements bequem über einen Schalter wie z.B. einen Drehkodierschalter direkt an der Stromversorgung manuell einzustellen, vorausgesetzt die Einschaltmanagementvarianten sind in der Firmware der Stromversorgung implementiert. Der Anwender wählt dann je nach Anwendung die passende Variante aus.

Aber auch das energieniveauabhängige Einschaltmanagement kann ohne Kommunikationsnetz/Kommunikationsschnittstelle (Kommunikationsnetzwerke 12 und 13) angewendet werden, wenn die Stromversorgungseinheit 5 in der Lage ist, die Energie zu messen, die während des Pufferbetriebs dem Energiespeicher 7 entnommen wurde. Diese Energie muss dann dem Energiespeicher 7 erst wieder zugeführt werden (oder aber mindestens die Energiemenge, um die Schaltschwelle SW zu erreichen), bevor der Leistungsausgang wieder eingeschaltet wird, um erfindungsgemäß einen sicheren Wiederbetrieb zu gewährleisten. Zudem ist beim energiespeicherladeniveauabhängigen Einschaltmanagement durchaus denkbar, es als Standardvorgehensweise in der Firmware der Stromversorgung zu verankern.

Beim verzögerungszeitabhängigen Einschaltmanagement wird wie beschrieben entweder manuell von einem Anwender oder über eine Engineering-Tool oder ein übergeordnetes System eine bestimmte Einschaltverzögerungszeit vorgegeben. Dieser Zeitraum sollte ausreichend groß eingestellt werden können, d. h. ein frei wählbarer Zeitraum zwischen einer Sekunde und der maximalen Ladezeit des verwendeten Energiespeichers (diese kann in den Stundenbereich hineinreichen). Die Einschaltverzögerungszeit sollte so groß gewählt werden, dass der verwendete und bis an die Entladungsgrenze entladene Energiespeicher wieder bis zu einem bestimmten Ladeniveau oder vollständig aufgeladen werden kann, um sicherzustellen, dass die Hochfahrzeit z.B. eines PCs/einer Maschine plus Herunterfahrzeit des PCs/der Maschine vom Energiespeicher überbrückt werden kann. Die Einschaltverzögerungszeit wird immer dann für das Einschalten des Leistungsausgangs berücksichtigt, wenn an der Stromversorgung die reguläre Versorgungsspannung anliegt aber im vorhergehenden Betrieb ein Ausfall der regulären Versorgungsspannung verzeichnet und in den Pufferbetrieb gegangen werden musste, der das Herunterfahren des PCs/der Maschine ausgelöst hat. Es ist durchaus denkbar eine Zusatzoption anzubieten, dass generell (also auch ohne dass ein Pufferbetrieb im vorhergehenden Betrieb der Stromversorgung gewesen sein musste, der das Herunterfahren eines PCs/einer Maschine ausgelöst hat) die Einschaltverzögerung beim Wiederbetrieb der Stromversorgung abgewartet werden soll. Die verzögerungszeitabhängige Variante könnte bevorzugt Einsatz finden, wenn das in Betrieb nehmen von mehreren Maschinen immer synchron erfolgen muss. D. h. wenn eine Anzahl von Maschinen untereinander und vor allem von derselben Versorgungsspannung abhängig sind und immer gleichzeitig wieder in Betrieb genommen werden müssen.

Beim energiespeicherladeniveauabhängigen Einschaltmanagement entscheidet das Energiespeicherladeniveau darüber, wann der Leistungsausgang der Stromversorgung eingeschaltet wird, wenn an der Stromversorgung die reguläre Versorgungsspannung anliegt, aber im vorhergehenden Betrieb ein Ausfall der regulären Versorgungsspannung verzeichnet wurde und in den Pufferbetrieb gegangen werden musste, der das Herunterfahren eines PCs/einer Maschine ausgelöst hat. Ein Anwender muss bei der Konfiguration des reinen energiespeicherladeniveauabhängigen Einschaltmanagements deutlich weniger berücksichtigen als beim verzögerungszeitabhängigen Einschaltmanagement. Aber auch hier ist es denkbar, eine Zusatzoption anzubieten, dass generell (also auch ohne dass ein Pufferbetrieb im vorhergehenden Betrieb der Stromversorgung gewesen sein musste, der das Herunterfahren des PCs/der Maschine ausgelöst hat) das Erreichen des eingestellten Energiespeicherladeniveaus beim Wiederbetrieb der Stromversorgung abgewartet werden soll. Selbstverständlich kann eine Applikation die für das Hoch- und Herunterfahren des PCs/der Maschine benötigte Energie auch fortlaufend ermitteln (das Messen der Energie kann dabei durch die Stromversorgungseinheit selbst geschehen oder über eine gesonderte Vorrichtung) und somit das für den abgesicherten Wiederbetrieb benötigte Energiespeicherladeniveau und die zugehörige Schaltschwelle neu festlegen. Selbstlernend kann sich die Applikation dann über das Hochsetzen der Schaltschwelle auf z.B. einen alternden Energiespeicher oder auf Veränderungen am PC/der Maschine einstellen oder sich über das Heruntersetzen der Schaltschwelle auf z.B. einen neuen Energiespeicher (wogegen der alte getauscht worden ist) oder auf Veränderungen am PC/der Maschine einstellen. Durch die fortlaufende Ermittlung der Schaltschwelle, die nichts anderes als ein Condition Monitoring des Energiespeichers oder sogar des PCs/der Maschine darstellt, kann der optimale Austauschzeitpunkt des Energiespeichers festgestellt und über ein Meldesystem gemeldet werden, um das sichere Hoch- und Herunterfahren des PCs/der Maschine entsprechend zu gewährleisten.

## Patentansprüche

1. Verfahren zum Betrieb einer elektrischen Anlage (10) mit einer Mehrzahl an elektrischen Verbrauchern (1,2,3 ...), welche an mindestens eine Stromversorgungseinheit (5) angeschlossen sind und von dieser mit einer Spannung (Ua) versorgt werden, wobei die Stromversorgungseinheit (5) entweder eine Grundversorgungsspannung (Ug) durchschaltet oder
im Falle eines Ausfalls der Grundversorgungsspannung (Ug) eine Pufferspannung (Up) durchschaltet, welche von einer Energiespeichereinheit (7) bereitgestellt wird,
**dadurch gekennzeichnet,**
**dass** zur Durchführung eines geregelten Einschaltvorgangs der elektrischen Verbraucher (1,2,3,... ) eine Einschaltverzögerungszeit (tv) vorgegeben oder ermittelt wird, nach deren Ablauf am Ausgang der Stromversorgungseinheit (5) entweder eine Grundversorgungsspannung (Ug) oder eine Pufferspannung (Up) durchgeschaltet wird.

2. Verfahren nach Anspruch 1,
**dadurch gekennzeichnet,**
**dass** im Falle eines Ausfalls der Grundversorgungsspannung (Ug) während der vorgegebenen Einschaltverzögerungszeit (tv) die Einschaltverzögerungszeit (tv) verlängert wird,
bis die Grundversorgungsspannung (Ug) wieder zum Durchschalten bereit steht oder
bis nach Überprüfung eines Ladeniveaus (LN) der Energiespeichereinheit (7) in Abhängigkeit des Ladeniveaus (LN) die Pufferspannung (Up) durchgeschaltet wird oder
bis ein Ladeniveau (LN) der Energiespeichereinheit (7) einen Schwellwert (SW) erreicht hat.

3. Verfahren nach Anspruch 1,
**dadurch gekennzeichnet,**
**dass** im Falle eines Ausfalls der Grundversorgungsspannung (Ug) während der vorgegebenen Einschaltverzögerungszeit (tv) die Einschaltverzögerungszeit (tv) so oft wiederholt wird
- bis die Grundversorgungsspannung (Ug) wieder bereit steht oder
- bis nach Überprüfung eines Ladeniveaus (LN) der Energiespeichereinheit (7) in Abhängigkeit des Ladeniveaus (LN) am Ausgang der Stromversorgungseinheit (5) als Ausgangsspannung (Ua) die Pufferspannung (Up) ausgegeben wird oder
- bis ein Ladeniveau (LN) der Energiespeichereinheit (7) einen Schwellwert (SW) erreicht hat,
wobei am Ausgang der Stromversorgungseinheit (5) die Ausgangsspannung (Ua) entweder sofort bei Vorhandensein der Grundversorgungsspannung (Ug) oder der Pufferspannung (Up) ausgegeben wird oder erst nach Ablauf eines Vielfachen der Einschaltverzögerungszeit (tv).

4. Verfahren nach Anspruch 1,
**dadurch gekennzeichnet,**
**dass** im Falle eines Ausfalls der Grundversorgungsspannung (Ug) während der vorgegebenen Einschaltverzögerungszeit (tv) die Einschaltverzögerungszeit (tv) ab dem Zeitpunkt des Ausfalls der Grundversorgungsspannung (Ug) erneut von vorne zu laufen beginnt und so oft wiederholt wird,
- bis die Grundversorgungsspannung (Ug) wieder bereit steht oder
- bis nach Überprüfung eines Ladeniveaus (LN) der Energiespeichereinheit (7) in Abhängigkeit des Ladeniveaus (LN) am Ausgang der Stromversorgungseinheit (5) als Ausgangsspannung (Ua) die Pufferspannung (Up) ausgegeben wird oder
- bis ein Ladeniveau (LN) der Energiespeichereinheit (7) einen Schwellwert (SW) erreicht hat,
wobei am Ausgang der Stromversorgungseinheit (5) die Ausgangsspannung (Ua) entweder sofort bei Vorhandensein der Grundversorgungsspannung (Ug) oder der Pufferspannung (Up) ausgegeben wird oder erst nach Ablauf eines Vielfachen der Einschaltverzögerungszeit (tv).

5. Verfahren nach Anspruch 2, 3 oder 4,
**dadurch gekennzeichnet,**
**dass** das Ladeniveau(LN) oder der Schwellwert (SW) von einem Anwender vorgegeben wird oder kontinuierlich ermittelt wird.

6. Verfahren nach einem der vorhergehenden Ansprüche,
**dadurch gekennzeichnet**,
die Stromversorgungseinheit (5) über ein erstes Kommunikationsnetz (12) mit den elektrischen Verbrauchern (1, 2, 3...) und über ein zweites Kommunikationsnetz (13) mit der Energiespeichereinheit (7) Daten austauscht,
wobei die Daten eine Auswahl aus zumindest den folgenden Größen umfasst: Spannungswerte (Ua, Ug, Up), Schwellwerte (SW), Ladeniveaus (LN) der Energiespeichereinheit (7), Zeitspannen (tv) oder Zeitwerte.

7. Verfahren nach einem der vorhergehenden Ansprüche,
**dadurch gekennzeichnet,**
**dass** alle Daten, insbesondere der Schwellwert (SW) für das Energiespeicherladeniveau und/oder eine Einschaltverzögerungszeit (tv) manuell oder im Rahmen eines Engineerings der elektrischen Anlage oder bei einer Konfigurierung oder Parametrierung der Stromversorgungseinheit (5) vorgegeben werden.

8. Verfahren nach einem vorhergehenden Ansprüche,
**dadurch gekennzeichnet,**
**dass** die am Ausgang der Stromversorgungseinheit (5) ausgegebene Spannung (Ug, Up) aufgeteilt wird und zeitversetzt den elektrischen Verbrauchern (1,2,3 ...) zur Verfügung gestellt wird.

9. Verfahren zum Betrieb einer elektrischen Anlage (10) mit einer Mehrzahl an elektrischen Verbrauchern (1,2,3 ...), welche an mindestens eine Stromversorgungseinheit (5) angeschlossen sind und von dieser mit einer Spannung (Ua) versorgt werden, wobei die Stromversorgungseinheit (5) entweder eine Grundversorgungsspannung (Ug) durchschaltet oder
im Falle eines Ausfalls der Grundversorgungsspannung (Ug) eine Pufferspannung (Up) durchschaltet, welche von einer Energiespeichereinheit (7) bereitgestellt wird,
**dadurch gekennzeichnet,**
**dass** zur Durchführung eines geregelten Einschaltvorgangs der elektrischen Verbraucher (1,2,3,... ) am Ausgang der Stromversorgungseinheit erst dann eine Spannung (Ug, Up) ausgegeben wird, wenn ein Ladeniveau (LN) der Energiespeichereinheit (7) gleich oder größer als ein Schwellwert (SW) des Energiespeicherladeniveaus ist.

10. Verfahren nach Anspruch 9,
**dadurch gekennzeichnet,**
**dass** das Ladeniveau (LN) oder der Schwellwert (SW) von einem Anwender vorgegeben wird oder kontinuierlich ermittelt wird.

11. Verfahren nach Anspruch 9 oder 10,
**dadurch gekennzeichnet**
**dass** eine Ladezeit (tl) der Energiespeichereinheit (7) ermittelt wird, während der eine Aufladung der Energiespeichereinheit (7) bis zu dem Schwellwert (SW) des Energiespeicherladeniveaus erfolgt.

12. Verfahren nach Anspruch 11,
**dadurch gekennzeichnet**
**dass** ferner eine Einschaltverzögerungszeit (tv) vorgegeben wird, nach deren Ablauf am Ausgang der Stromversorgungseinheit (5) eine Spannung (Ug, Up) ausgegeben wird, wobei im Falle, dass die Ladezeit (tl) größer als die vorgegebene Einschaltverzögerungszeit (tv) ist,
die Einschaltverzögerungszeit (tv) bis zum Ablauf der Ladezeit (tl) verlängert wird und erst dann am Ausgang der Stromversorgungseinheit (5) eine Spannung (Ug, Up) ausgegeben wird.

13. Verfahren nach einem der vorhergehenden Ansprüche,
**dadurch gekennzeichnet**,
die Stromversorgungseinheit (5) über ein erstes Kommunikationsnetz (12) mit den elektrischen Verbrauchern (1, 2, 3...) und über ein zweites Kommunikationsnetz (13) mit der Energiespeichereinheit (7) Daten austauscht,
wobei die Daten eine Auswahl aus zumindest den folgenden Größen umfasst: Spannungswerte (Ua, Ug, Up), Schwellwerte (SW), Ladeniveaus (LN) der Energiespeichereinheit (7), Zeitspannen (tv, tl) oder Zeitwerte.

14. Verfahren nach einem der vorhergehenden Ansprüche,
**dadurch gekennzeichnet,**
**dass** alle Daten, insbesondere der Schwellwert (SW) für das Energiespeicherladeniveau und/oder eine Einschaltverzögerungszeit (tv) manuell oder im Rahmen eines Engineerings der elektrischen Anlage oder bei einer Konfigurierung oder Parametrierung der Stromversorgungseinheit (5) vorgegeben wird.

15. Verfahren nach einem der vorhergehenden Ansprüche,
**dadurch gekennzeichnet,**
**dass** die am Ausgang der Stromversorgungseinheit (5) ausgegebene Spannung (Ug, Up) aufgeteilt wird und zeitversetzt den elektrischen Verbrauchern (1,2,3 ...) zur Verfügung gestellt wird.

16. Stromversorgungseinheit (5),
aufweisend
- mindestens einen Ausgang zur Versorgung einer Mehrzahl an elektrischen Verbrauchern (1,2,3 ...) mit einer Spannung (Ua),
- mindestens einen ersten Eingang, der mit einem Ausgang einer Spannungsquelle (6) verbunden ist, die eine Grundversorgungsspannung (Ug) liefert,
- mindestens einen zweiten Eingang, der mit einem Ausgang einer Energiespeichereinheit (7) verbunden ist, die bei Ausfall der Grundversorgungsspannung (Ug) eine Pufferspannung (Up) liefert,
dadurch
dass die Stromversorgungseinheit (5) zur Durchführung eines geregelten Einschaltvorgangs der elektrischen Verbraucher (1,2,3 ...) ausgebildet ist,
ein Verfahren nach einem der Ansprüche 1 bis 15 durchzuführen.

17. Stromversorgungseinheit (5) nach Anspruch 16,
**dadurch gekennzeichnet,**
**dass** zumindest eine erste Schnittstelle zur Kommunikation und zum Datenaustausch über ein erstes Kommunikationsnetz (12) mit den elektrischen Verbrauchern (1,2,3...) und zumindest eine zweite Schnittstelle zur Kommunikation und zum Datenaustausch über ein zweites Kommunikationsnetz (13) mit der Energiespeichereinheit (7) vorhanden ist.

18. Stromversorgungseinheit (5) nach einem der Ansprüche 16 oder 17,
**dadurch gekennzeichnet,**
**dass** ein Modul für die Ermittlung eines Energiespeicherladeniveaus der Energiespeichereinheit (7) und/oder der Ladezeit (tl) vorgesehen ist.

19. Stromversorgungseinheit (5) nach einem der Ansprüche 16 bis 18,
**dadurch gekennzeichnet,**
**dass** zumindest eine weitere Schnittstelle zur Kommunikation mit externen Servern oder Leitsystemen vorhanden ist oder dass diese Kommunikation über die erste oder zweite Schnittstelle durchgeführt wird.

20. Stromversorgungseinheit (5) nach einem der Ansprüche 16 bis 19,
**dadurch gekennzeichnet,**
**dass** Mittel zur Durchführung von Engineering, Konfiguration und Parametrierung der Einheit (5) vorhanden sind.

21. Stromversorgungseinheit (5) nach einem der Ansprüche 16 bis 20,
**dadurch gekennzeichnet,**
**dass** die Energiespeichereinheit (7) eine beliebige Anzahl an Batteriemodulen (7a, 7b) umfasst.

22. Elektrisch betriebene Anlage (10) mit einer Mehrzahl an elektrischen Verbrauchern (1,2,3 ...),
welche mindestens eine Stromversorgungseinheit gemäß einem der Ansprüche 16 bis 21 umfasst.

23. Elektrisch betriebene Anlage (10) nach Anspruch 22, wobei die Stromversorgungseinheit (5) und/oder die elektrischen Verbraucher (1,2,3,) Softwarebausteine umfassen und derart ausgestaltet sind, dass sie über ein Softwarewerkzeug parametrierbar sind.

24. Computerprogramm mit durch einen Computer ausführbaren Programmcodeanweisungen zur Implementierung eines Verfahrens nach einem der Ansprüche 1 bis 15, wenn das Computerprogramm auf einem Computer ausgeführt wird.
